# EUROPEAN PATENT APPLICATION

(11) **EP 1 696 041 A1**
(43) Date of publication of application: **30.08.2006**
(21) Application number: 06002528.5
(22) Date of filing: 08.02.2006
(51) Int. Cl.: C21D 1/68, C21D 6/00, F04B 27/18, B23K 35/30, B23K 1/00

(54) **Method of manufacturing an assembled body of a plurality of members, manufacturing method of electromagnetic control valve, and control valve for variable capacity compressor**

(30) Priority: 28.02.2005 JP 2005054235; 31.03.2005 JP 2005101783; 21.07.2005 JP 2005211623
(71) Applicant: Fujikoki Corporation, Tokyo 158-0082 (JP)
(72) Inventor: Kume, Yoshiyuki, Setagaya-ku Tokyo 158-0082 (JP); Imai, Masayuki, Setagaya-ku Tokyo 158-0082 (JP); Kondo, Tatsuya, Setagaya-ku Tokyo 158-0082 (JP); Watanuki, Toru, Setagaya-ku Tokyo 158-0082 (JP)
(74) Representative: Gleiss, Alf-Olav

(57) **Abstract**

There is provided a brazing method which makes it possible to rationally perform not only the brazing between a metal member such as a stator made of a magnetic material and a metal member such as a guide pipe made of a non-magnetic material but also the magnetic annealing of these metal members. By making use of a brazing material (90) which can be fused at a lower temperature than a magnetic annealing temperature of metal member (33), the metal member such as a stator made of a magnetic material and the metal member (35) such as a guide pipe made of a non-magnetic material are heated to a predetermined temperature in a furnace to perform the magnetic annealing of the metal member (33) concurrent with the brazing of these metal members.

## Description

### BACKGROUND OF THE INVENTION

### 1. Field of the Invention

The present invention relates to a method of manufacturing an assemble body composed of a plurality of components comprising a metallic member made of a magnetic material, and a metallic member made of a non-magnetic material. The present invention also relates to a method of manufacturing an electromagnetic control valve which is constituted by an assembled body wherein a stator made of a magnetic metallic material is fixedly coupled by means brazing to a guide pipe made of a non-magnetic metallic material and designed to be used as a plunger guide.

Further, the present invention relates to a control valve for a variable capacity compressor to be employed in air conditioners for vehicle, in particular, to a control valve for a variable capacity compressor, which is suited for use in a crutch-attached compressor wherein the transmission of rotating driving force from the engine to the rotating axis of compressor is effected by means of a crutch.

### 2. Description of the Related Art

As shown in JP Patent Laid-open Publication (Kokai) No. 2003-166667 (2003), the electromagnetic control valve for a variable capacity compressor to be employed in air conditioners for vehicle for example is constituted by an assembled body comprising a stator made of a magnetic metallic material, a guide pipe for use as a plunger guide which is fixedly coupled to an lower end portion of the stator and made of a non-magnetic metallic material, a holder fixedly coupled to an lower end portion of the guide pipe and made of a metallic material, and a housing fixedly coupled to the holder and made of a metallic material.

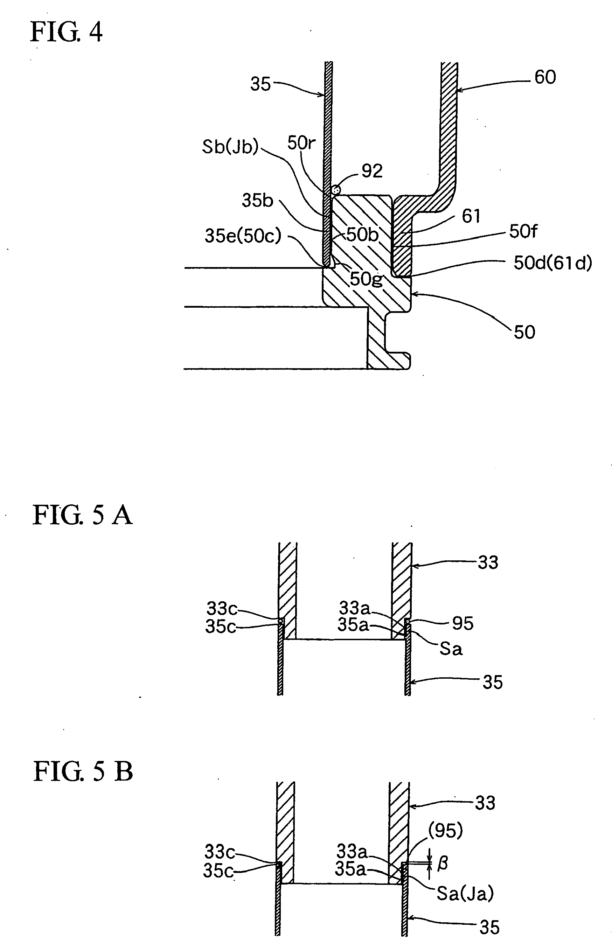

The manufacture of the electromagnetic control valve constituted by the aforementioned assembled body has been conventionally executed as follows for example. Namely, as shown in FIG. 5(A), a stator 33 is formed into a cylindrical body having a step portion, thereby creating a lower end portion having a smaller outer diameter. Then, a guide pipe 35 is formed into a cylindrical body having an inner diameter which is large enough to enable the guide pipe 35 to externally fit on the diametrally contracted portion (i.e. the lower end portion) 33a of the stator 33 such that an upper edge 35c of the guide pipe 35 can be butted against the annular terrace surface 33c of stator 33. Then, a brazing material 95 is interposed between the terrace surface 33c of stator 33 and the upper edge 35c of the guide pipe 35. Thereafter, the stator 33 and the guide pipe 35 are heated up to a predetermined temperature (brazing temperature) in a furnace, thereby brazing the stator 33 to the guide pipe 35. In this case, as shown in FIG. 5(B), since the brazing material 95 is caused to melt in the furnace, the fused brazing material 95 is permitted to flow into a space "Sa" of the fitted portion between the stator 33 and the guide pipe 35. As a result, the stator 33 is caused to move downward. Subsequently, when the fitted portion between the stator 33 and the guide pipe 35 is cooled sufficiently, the stator 33 and the guide pipe 35 are fixedly coupled to each other through the brazing of the fitted portion (brazing portion "Ja").

Generally, the compressor to be employed in air conditioners for vehicle is driven by means of the engine, whose rotational speed is designed to be fluctuated depending on circumstances. Because of this, a variable capacity compressor which is capable of adjusting the discharge volume of cooling medium irrespective of the rotational speed of engine is generally employed as a compressor for the air conditioner of vehicle.

A control valve to be employed in this compressor for the air conditioners of vehicle is generally constructed as follows. Namely, a cooling medium exhibiting a discharge pressure "Pb" is permitted to enter into the crank chamber of compressor from the discharge chamber of compressor so as to adjust the pressure "Pc" inside the crank chamber. In this case, the flow rate of cooling medium exhibiting a discharge pressure "Pb" to the crank chamber is restricted such that the quantity of supply (throttling volume) of cooling medium to the crank chamber can be controlled depending on the sucking pressure "Ps" of compressor. For this purpose, various proposals have been suggested or put into practice, as seen from JP Patent Laid-open Publication (Kokai) No. 2002-303262 (2002), where an electromagnetic actuator (solenoid) is employed.

Further, as for the variable capacity compressor to be employed in air conditioners for vehicle, there are also known a crutch-attached compressor wherein the transmission of rotating driving force from the engine to the rotating axis of compressor is effected by means of a crutch, and a crutch-less compressor wherein the rotating driving force of the engine is directly transmitted to the rotating axis of compressor without intervention of a crutch.

The conventional method of manufacturing an electromagnetic control valve as described above is accompanied with the following problems.
(i) Since it requires the coupling and fixing work between the guide pipe 35 and the holder as well as between the holder and the housing in addition to the brazing work between the stator 33 and the guide pipe 35, a great deal of troublesome work and time are needed for assembling these assembled bodies, thus inevitably increasing the manufacturing cost of the electromagnetic control valve. Further, the assembled body that has been once subjected to brazing process can no longer be subjected, as a matter of fact, to a heat treatment after the assembling thereof. Therefore, there is a problem that when the assembled body includes a magnetic material, the magnetic property of the magnetic material cannot be sufficiently enhanced.
(ii) Since the stator 33 and the guide pipe 35 are brazed together through the employment of brazing material 95 disposed between the terrace surface 33c of stator 33 and the upper edge 35c of the guide pipe 35, the brazing material 95 is caused to melt during the step of brazing, the fused brazing material 95 is permitted to flow into a space "Sa" of the fitted portion between the stator 33 and the guide pipe 35, causing the stator 33 to move downward as shown in FIG. 5(B). However, there are problems, as the stator 33 is caused to move downward, that the stator 33 tends to incline, and that the brazing material 95 is permitted to leave between the terrace surface 33c of stator 33 and the upper edge 35c of the guide pipe 35, thereby preventing the stator 33 from sufficiently descending. As a result, the terrace surface 33c is prevented from butting against the upper edge 35c of the guide pipe 35, leaving an air gap "β" between the terrace surface 33c and the upper edge 35c of the guide pipe 35 even after the brazing. If the air gap "β" is left remained in this manner, the length of air gap between the sucking member to be secured to a lower end of the stator and the plunger becomes inappropriate, thus raising the problem that the control of flow rate cannot be appropriately performed.

Further, in the case of the control valve for a variable capacity compressor, especially the control valve for a crutch-less compressor, which is provided with an electromagnetic actuator (solenoid) constituted by a coil, a sucking member, a plunger, etc., when the value of current to be fed to the coil of electromagnetic actuator (solenoid) becomes zero (OFF of electric current) or nearly zero, the sucking force of plunger by means of the sucking member is caused to decrease, thereby causing the valve rod (the main body of valve) to shift, in a stroke, to the maximum lift position due to the valve-opening force of valve spring. As a result, the valve aperture with which the valve body is retractively contacted is caused to completely open (the opening degree of valve or the magnitude of valve lift becomes maximum). As a result, the flow rate of a cooling medium to be fed from the cooling medium outlet port located on the downstream side of the valve aperture to the crank chamber of compressor is caused to increase in a stroke (maximum flow rate), thus quickly increasing the pressure "Pc" inside the crank chamber of compressor. Namely, the region where the value of current is nearly zero would be turned into an uncontrollable region.

Even if this uncontrollable region is permitted to exist in this manner, almost no problem would be raised in the case of the crutch-less compressor. In the case of the crutch-attached compressor however, when the control valve is caused to bring into the uncontrollable region, the pressure "Pc" inside the crank chamber exceeds over an allowable limitation, thereby raising problems in terms of control as well as in structural viewpoints. Thus, the control valve for use in the crutch-less compressor cannot be utilized as it is in the crutch-attached compressor.

### BRIEF SUMMARY OF THE INVENTION

The present invention has been made in view of the circumstances mentioned above and, therefore, an object of the present invention to provide a brazing method which makes it possible to rationally perform not only the brazing between a metal member such as a stator made of a magnetic material and a metal member such as a guide pipe made of a non-magnetic material but also the magnetic annealing of these metal members. Another object of the present invention is to provide a method of rationally and precisely manufacture an electromagnetic control valve provided with an assembled body comprising a stator, a guide pipe, a holder and a housing at low costs.

A further object of the present invention is to provide a control valve for a variable capacity compressor which can be employed in a crutch-attached compressor and which is capable of controlling the flow rate of cooling medium to be delivered from the cooling medium outlet port disposed on a downstream side of valve aperture to the crank chamber of compressor, thereby enabling the flow rate of cooling medium to be controlled so as not to exceed over an acceptable limit.

With a view to achieving the aforementioned objects, there is provided, according to one aspect of the present invention, a method of manufacturing an assembled body composed of a plurality of members including a metal member "A" made of a magnetic material and a metal member "B" made of a non-magnetic material, the method comprising the steps of: heating the metal member "A" and the metal member "B" under conditions suitable for magnetic annealing of the metal member "A" to braze the metal member "A" to the metal member "B" to obtain an assembled body comprising the metal member "A" and the metal member "B"; and gradually cooling the assembled body to perform magnetic annealing of the metal member "A".

In this case, preferably, the metal member "A" is brazed to the metal member "B" by making use of a brazing material having a melting point which is lower than a magnetic annealing temperature of the metal member "A".

In a preferable embodiment, the metal member "A" is formed by making use of a magnetic steel such as an electromagnetic stainless steel, the metal member "B" is formed by making use of a non-magnetic steel material such as non-magnetic stainless steel, and the brazing material is formed by making use of copper wax or bronze wax.

In another preferable embodiment, the metal member "A" is formed of a step-attached columnar or cylindrical body having a diametrally contracted end portion and a terrace surface, the metal member "B" is formed of a cylindrical body having an inner diameter which is large enough to enable it to externally fit on the diametrally contracted end portion, the diametrally contracted end portion of the metal member "A" is provided, at an extended end portion thereof which is remote from the terrace surface, with an annular groove facing an inner peripheral surface of the metal member "B" for holding a brazing material therein, and the brazing is performed under conditions wherein the metal member "B" is externally fitted on the diametrally contracted end portion with an fitted end of the metal member "B" being butted against the terrace surface and the brazing material being held between the annular groove and the inner peripheral surface of the metal member "B".

In a more specific embodiment, the metal member "A" is a stator of an electromagnetic control valve, and the metal member "B" is a guide pipe to be used as a plunger guide of the electromagnetic control valve.

Further, according to another aspect of the present invention, there is also provided a method for manufacturing an electromagnetic control valve which is composed of an assembled body comprising a stator made of a magnetic metallic material, a guide pipe for use as a plunger guide which is fixedly coupled to an lower end portion of the stator and made of a non-magnetic metallic material, a holder fixedly coupled to an lower end portion of the guide pipe and made of a metallic material, and a housing fixedly coupled to the holder and made of a magnetic metallic material. In this manufacturing method, the stator is formed of a step-attached columnar or cylindrical body having a diametrally contracted end portion and a terrace surface, the guide pipe is formed of a cylindrical body having an inner diameter which is large enough to enable it to externally fit on the diametrally contracted end portion, the diametrally contracted end portion of the stator is provided, at an extended end portion thereof which is remote from the terrace surface, with an annular groove facing an inner peripheral surface of the guide pipe for holding a brazing material therein, the guide pipe is externally fitted on the diametrally contracted end portion with an fitted end of the guide pipe being butted against the terrace surface to thereby temporarily interconnect the stator, the guide pipe, the holder and the housing, and the brazing material is held between the annular groove and the inner peripheral surface of the guide pipe.

Then, the electromagnetic control valve is subjected to a treatment which comprises the steps of heating the temporarily interconnected assembled body under conditions for effecting magnetic annealing of the magnetic metallic material such as the stator in a furnace to braze the stator to the guide pipe; and gradually cooling the assembled body after the assembled body is taken out of the furnace to perform magnetic annealing of the stator, the holder and the housing.

In a preferable embodiment of the aforementioned manufacturing method of electromagnetic control valve, the housing is fabricated into a configuration enabling the housing to be press-inserted into the holder, the holder and housing are subjected to nickel plating or chrome plating, and the plated housing is press-inserted into the holder, thereby fabricating the temporarily interconnected assembled body.

In a further preferable embodiment of the aforementioned manufacturing method of electromagnetic control valve, the holder is formed into a step-attached cylindrical body to thereby enable the guide pipe to be snugly inserted therein, and the fabrication of the temporarily interconnected assembled body is performed by inserting the guide pipe into the holder and, at the same time, by disposing the brazing material at an interface between the inserted portion of the guide pipe and the holder.

Furthermore, in order to achieve the aforementioned object, the present invention provides a control valve for a variable capacity compressor, which is designed to be employed in a crutch-attached compressor. Namely, this control valve for a variable capacity compressor fundamentally comprises a valve rod having a valve body; a valve main body provided with a valve chamber having a valve aperture with which the valve body can be retractivebly contacted, with an inlet port for cooling medium of discharge pressure which is disposed on an upstream side of the valve aperture, and with a cooling medium outlet port which is disposed on a downstream side of the valve aperture and communicated with a crank chamber of the compressor; an electromagnetic actuator for driving the valve rod to move in the direction of opening or closing the valve aperture; and a pressure sensitive moving member for driving the valve rod to move in the direction of opening or closing the valve aperture in response to a sucking pressure of the compressor.

This control valve for a variable capacity compressor is further characterized in that the cooling medium outlet port is further provided with a restricting mechanism for restricting a maximum flow rate of the cooling medium to be fed to the crank chamber.

More specifically, the control valve for a variable capacity compressor according to the present invention comprises a valve rod having a valve body; a valve main body provided with a valve chamber having a valve aperture with which the valve body can be retractivebly contacted, with an inlet port for introducing cooling medium of discharge pressure from a compressor, the inlet port being disposed on an upstream side of the valve aperture, and with a cooling medium outlet port which is disposed on a downstream side of the valve aperture and communicated with a crank chamber of the compressor; an electromagnetic actuator constituted by a coil, a cylindrical stator disposed on the inner peripheral side of the coil, a sucking member secured to the stator, and a plunger disposed below the sucking member and enabled to slide up and down; a pressure sensitive chamber which is formed on the inner peripheral side of the stator and over the sucking member and to which an inlet pressure is introduced therein from the compressor; a pressure sensitive driving member disposed in the pressure-sensitive chamber; and an operating rod interposed between a pressure sensitive driving member and the plunger.

In this control valve for a variable capacity compressor, the valve body is designed to be moved in the valve-closing direction as the plunger is moved close to the sucking member and in the valve-opening direction as the operating rod is pushed downward by the actuation of the pressure sensitive driving member; and the cooling medium outlet port is further provided with a restricting mechanism for restricting a maximum flow rate of the cooling medium to be fed to the crank chamber.

In a preferable embodiment, the restricting mechanism is constituted by a restricting pore-attached closing member which is secured to the cooling medium outlet port.

In a further preferable embodiment, the restricting pore-attached closing member is provided with one or a plurality of restricting pores, a total area of aperture of the restricting pore-attached closing member is less than a maximum effective aperture area of the valve aperture.

In a further preferable embodiment of the control valve for a variable capacity compressor, the restricting mechanism is provided so as to regulate the magnitude of opening of valve in order to inhibit changes in gradient of controlling pressure.

In this case, the magnitude of lift of the valve body from the valve aperture is preferably regulated for regulating the magnitude of opening of valve.

According to the manufacturing method of a control valve for a variable capacity compressor as proposed by the present invention, a metal member "A" made of a magnetic material is brazed to a metal member "B" made of a non-magnetic material in such a manner that by making use of a brazing material having a melting point which is lower than a magnetic annealing temperature of the metal member "A", the metal member "A" and the metal member "B" are heated to braze them under conditions suitable for magnetic annealing of the metal member "A" to obtain an assembled body comprising the metal member "A" and the metal member "B", and the assembled body is taken out of the furnace to gradually cool to perform magnetic annealing of the metal member "A". As a result, it is possible to satisfactorily perform the magnetic annealing even after the brazing, thereby making it possible to enhance the magnetic property of the brazed assembled body comprising a magnetic metallic material.

Further, according to the manufacturing method of the electromagnetic control valve as set forth by the present invention, an annular groove for holding a brazing material is provided at an extended end portion (which is remote from the terrace surface) of the diametrally contracted end portion of the stator and the guide pipe is externally fitted on the diametrally contracted end portion with an fitted end of the guide pipe being butted against the terrace surface to thereby temporarily interconnect the stator, the guide pipe, the holder and the housing. As a result, the brazing material is enabled to be held between the annular groove and the inner peripheral surface of the guide pipe. Then, this tacked assembled body is heated in a furnace under conditions for effecting magnetic annealing of the magnetic metallic material such as the stator to perform the brazing of the stator and the guide pipe. Thereafter, the assembled body is gradually cooled to perform magnetic annealing of the stator, the holder and the housing.

In this case, due to a capillary action, the fused brazing material is sucked up into an air gap of the fitted portion between the stator and the guide pipe. In this case, since the upper end of the guide pipe is butted against the terrace surface of the stator from the beginning without the interposition of brazing material therebetween and since there is no possibility of the stator being lifted up by the brazing material that has been sucked up into the air gap of the fitted portion between the stator and the guide pipe, the contacted state between the upper end of the guide pipe and the terrace surface of the stator can be retained during the brazing process. After finishing the brazing in this manner, the assembled body is permitted to cool, thereby brazing and fixedly coupling the stator to the guide pipe through the fitted portion thereof. At the same time, the magnetic annealing of the stator, the holder and the housing was achieved and the magnetic properties of the assembled body can be enhanced.

According to the aforementioned manufacturing method, since the brazing material can be prevented from entering into the air gap between the upper end of the guide pipe and the terrace surface of the stator, the contacted state between the upper end of the guide pipe and the terrace surface of the stator can be retained even after finishing the brazing process and hence no air gap can be permitted to generate between these portions. As a result, the length of air gap between the sucking member to be secured to a lower end of the stator and the plunger can be secured appropriately, thus making it possible to manufacture an electromagnetic control valve which is capable of appropriately performing the control of flow rate.

Additionally, since the housing is fabricated into a configuration enabling the housing to be press-inserted into the holder and since nickel plating or chrome plating is applied to the holder and housing, the resultant plated housing being subsequently press-inserted into the holder to fabricate an assembled body of tacked state, it is possible to bring about a diffusion bonding effect at the plated portions of these housing and holder. As a result, the bonding strength between the housing and the holder can be greatly increased as compared with that can be obtained when the housing is simply press-inserted into the holder.

Further, in the case of the control valve for a variable capacity compressor according to the present invention, even if the valve aperture is completely or nearly completely opened, since the maximum flow rate of the cooling medium to be fed to the crank chamber of compressor can be throttled and restricted by a restricting mechanism such as a throttle aperture-attached closing member provided at the cooling medium outlet port, it is possible to prevent the maximum flow rate from exceeding over an acceptable limit in the crutch-attached compressor. Therefore, the control valve of the present invention can be used in the crutch-attached compressor. Furthermore, since the control valve of the present invention can be fabricated by simply attaching a restricting mechanism such as a throttle aperture-attached closing member to the conventional control valve for a crutch-less compressor, most of parts for control valve can be used not only for the crutch-less compressor but also for the crutch-attached compressor when the control valves are manufactured for use in a crutch-less compressor or in a crutch-attached compressor, thereby making it possible to reduce the manufacturing cost of the control valve.

Furthermore, according to the control valve of the present invention, since the magnitude of opening of valve (the magnitude of lift from the valve aperture of valve body) can be regulated through the provision of the restricting mechanism so as to suppress the change in gradient of controlling pressure, the gradient of controlling pressure in the controllable region can be made almost identical with the gradient of controlling pressure to be obtained in the situation where the restricting mechanism is not provided (i.e. the situation of the control valve for use in a crutch-less compressor). Therefore, it is now possible not only to restrict the aforementioned maximum flow rate but also to substantially completely satisfy the controlling characteristics demanded of the control valve for use in the crutch-attached compressor.

### BRIEF DESCRIPTION OF THE SEVERAL VIEWS OF THE DRAWING

FIG. 1 is a longitudinal sectional view illustrating one embodiment of the electromagnetic control valve that has been manufactured according to the brazing method and manufacturing method representing one embodiment according to the present invention;
FIG. 2 is a longitudinal sectional view illustrating an assembled body provided with the electromagnetic control valve shown in FIG. 1;
FIG. 3 is an enlarged cross-sectional view illustrating the brazed portion of the stator and the guide pipe both disposed in the electromagnetic control valve shown in FIG. 1;
FIG. 4 is an enlarged cross-sectional view illustrating the brazed portion of the stator and the guide pipe as well as the press-inserted portion of the housing in the holder;
FIGs. 5(A) and 5(B) respectively shows a longitudinal sectional view for explaining the problems involved in the brazing of the stator and the holder of the conventional electromagnetic control valve;
FIG. 6 is a longitudinal sectional view illustrating a second embodiment of the control valve for a variable capacity type (crutch-attached) compressor according to the present invention;
FIG. 7 is an enlarged cross-sectional view of the region of cooling medium outlet port (and chamber) for illustrating a third embodiment of the control valve for a variable capacity type (crutch-attached) compressor according to the present invention; and
FIG. 8 is a graph illustrating the relationship between the pressure "Pc" and the values of electric current for explaining the operation, action and effects of the control valve of the third embodiment of the present invention.

### DETAILED DESCRIPTION OF THE INVENTION

Next, several embodiments of the brazing method, the manufacturing method of electromagnetic control valve, and the electromagnetic control valve of the present invention will be explained in detail with reference to the drawings.

### <First embodiment>

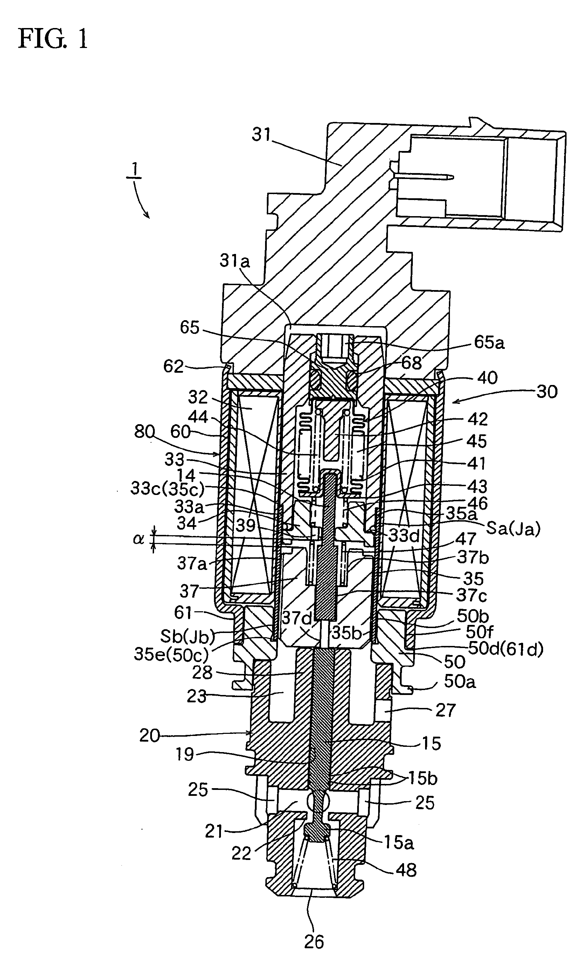

FIG. 1 shows a longitudinal sectional view illustrating one embodiment of the electromagnetic control valve for a variable capacity compressor, that has been manufactured according to the brazing method and manufacturing method representing one embodiment according to the present invention. In the following description, the construction of the electromagnetic control valve 1 will be explained at first, and then the method of manufacturing the electromagnetic control valve 1 will be explained.

The control valve 1 shown in FIG. 1 is equipped with a valve rod 15 having a valve body 1a; a valve main body 20 composed of a valve chamber 21 provided with a valve seat (valve aperture) 22 with which the valve body 1a can be retractivebly contacted, a plurality of inlet ports 25 for introducing a cooling medium of discharge pressure "Pd" from the compressor into the outer peripheral portion of the valve chamber 21 (on the upstream side of the valve seat 22), and a high pressure cooling medium supply port 26 disposed below (downstream side of) the valve seat 22 and communicated with the crank chamber of compressor; and an electromagnetic actuator 30.

The electromagnetic actuator 30 is equipped with an electromagnetic coil 32 having a connector 31 for electroexcitation, a step-attached cylindrical stator 33 made of a magnetic metallic material and disposed on the inner peripheral side of the electromagnetic coil 32, a sucking member 34 having U-shaped cross-section and press-inserted into a lower inner peripheral end portion of the stator 33, a plunger 37 slidably disposed to move up and down in a guide pipe 35 and located below the sucking member 34, the cylindrical guide pipe 35 fixedly coupled, through a brazing which is applied to an upper inner peripheral end 35a, to a lower outer peripheral end portion (diametrally contracted end portion 33a) of the stator 33, a step-attached cylindrical housing 60 disposed covering the outer peripheral portion of the coil 32, and a short cylindrical holder 50 interposed between an upper end portion of the valve main body 20 and the coil 32.

A lower end portion of the pipe 35 is inserted in a diametrally enlarged portion 50b of the holder 50 and fixedly coupled thereto by means of brazing (as described hereinafter) . A lower diametrally contracted portion 61 of the housing 60 is externally inserted over an outer peripheral portion of holder 50 (as described hereinafter). An upper end portion 62 of the housing 60 is calked to nearly an upper end portion of the coil 32. At a lower end portion of the holder 50, there is integrally formed a thin wall flanged cylindrical portion 50a which is externally fitted on an upper outer peripheral wall of the valve main body 20. The holder 50 is fixed to the valve main body 20 through the peel-calking work of the cylindrical portion 50a.

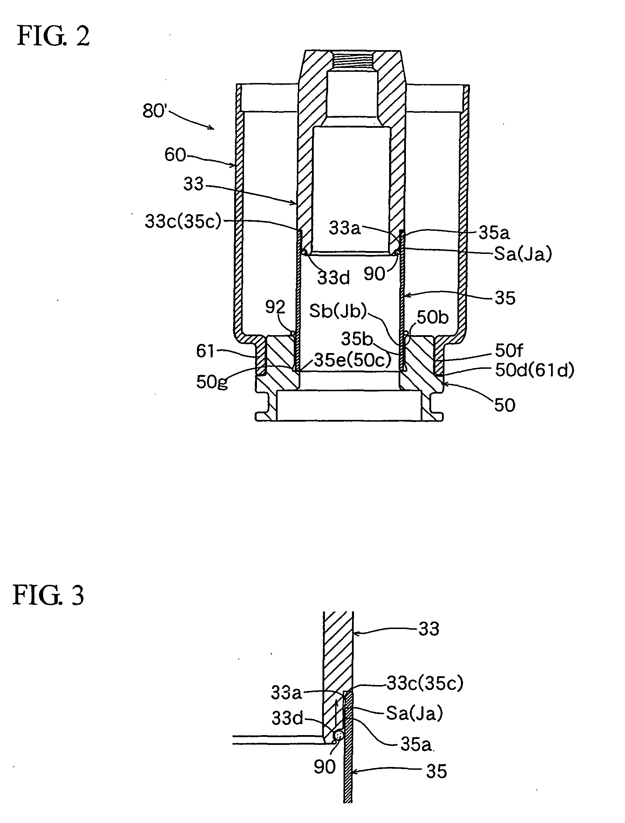

An assembled body 80 of this embodiment is constituted by the stator 33, the guide pipe 35, the holder 50 and the housing 60 all constructed as described above (as described hereinafter with reference to FIGs. 2, 3 and 4).

Additionally, a hexagon socket head adjusting screw 65 is screwed on an upper portion of the stator 33. A pressure sensitive chamber 45 into which the sucking pressure "Ps" of compressor is to be introduced is formed between the adjusting screw 65 attached to the inner peripheral wall of stator 33 and the sucking member 34. In this pressure sensitive chamber 45, there is disposed, as a pressure sensitive driving member, a bellows main body 40 consisting of a bellows 41, a downwardly projected upper stopper 42, a reverse U-shaped lower stopper 43 and a compression coil spring 44. Further, a compression coil spring 46 for urging the bellows main body 40 to contract (in the direction to contract it toward the adjusting screw 65) is interposed between the bellows main body 40 and the sucking member 34. Further, a step-attached operating rod 14 piercing through the sucking member 34 is interposed between the reverse U-shaped lower stopper 43 and a U-shaped portion 37c of plunger 37. Additionally, a valve-opening spring 47 made of a compression coil spring for urging the valve rod 15 downward (in the direction to open the valve) by way of the plunger 37 is interposed between the sucking member 34 and the U-shaped portion 37b of plunger 37.

On the other hand, a reverse U-shaped stopper 28 for regulating the lowermost descending position of the plunger 37 is projected upward over the valve chamber 21 of the valve main body 20. A guide hole 19 in which the valve rod 15 is slidably inserted is formed at a central portion of the valve main body 20 including the reverse U-shaped stopper 28 and located over the valve chamber. A suction pressure-introducing chamber 23 is formed around the outer peripheral wall of the reverse U-shaped stopper 28 and a plurality of suction pressure cooling medium-introducing ports 27 are formed in the outer wall of the suction pressure-introducing chamber 23. A cooling medium of sucking pressure "Ps" that has been introduced into the suction pressure-introducing chamber 23 from the cooling medium-introducing ports 27 is designed to be introduced into the pressure sensitive chamber 45 via longitudinal grooves 37a formed on the outer peripheral wall of plunger 37, via a through-hole 37d formed at a central axis of plunger 37 and via a through-hole 39 formed in the sucking member 34.

A valve-closing spring 48 made of a conical compression spring for urging the valve rod 15 upward is disposed at a lower portion (a high-pressure cooling medium supply port 26) of the valve main body 20. By the effect of urging force of this valve-closing spring 48, an upper end portion of the valve rod 15 is always brought into press-contact with the through-hole 37d portion of plunger 37.

In the control valve 1 constructed as described above, when the solenoid portion consisting of the coil 32, the stator 33 and the sucking member 34 is electroexcited, the plunger 37 is drawn toward the sucking member 34, forcing the valve rod 15 to move upward (in the valve-closing direction) by the urging force of the valve-closing spring 48. On the other hand, the cooling medium of suction pressure "Ps" that has been introduced into the cooling medium-introducing ports 27 from the compressor is introduced from the suction pressure-introducing chamber 23 into the pressure sensitive chamber 45 via longitudinal grooves 37a formed on the outer peripheral wall of plunger 37 and via a through-hole 39 formed in the sucking member 34. The bellows main body 40 (the interior thereof is kept in vacuum) is caused to displace, i.e. contract or expand depending on the pressure (the suction pressure "Ps") inside the pressure sensitive chamber 45 (when the suction pressure "Ps" is high, the bellows main body 40 is contracted, and when the suction pressure "Ps" is low, the bellows main body 40 is expanded). Then, this displacement is transmitted, via the operating rod 14 and the plunger 37, to the valve rod 15, thereby making it possible to adjust the magnitude of opening of valve (the effective cross-sectional area of passageway) . Namely, the magnitude of opening of valve can be determined depending on the sucking force of the plunger 37 to be effected by the solenoid portion consisting of the coil 32, the stator 33 and the sucking member 34, on the urging force of the bellows main body 40, and on the urging force of the valve-opening spring 47 and the valve-closing spring 48. Further, depending on this magnitude of opening of valve, the quantity (magnitude of restriction) of cooling medium of discharge pressure "Pd" that has been introduced from the discharge pressure cooling medium inlet port into the valve chamber 21 and that can be delivered toward the supply port 26, i.e. toward the crank chamber can be adjusted, thus making it possible to control the pressure "Pc" inside the crank chamber.

The control valve 1 of this embodiment which is constructed as described above can be manufactured as follows. As shown in FIGs. 2 and 3, the stator 33 is formed into a step-attached cylindrical body having a diametrally contracted end portion 33a and a terrace surface 33c. The guide pipe 35 is formed into a cylindrical body having an inner diameter which is large enough to enable an upper inner peripheral end portion 35a to externally fit on the diametrally contracted end portion 33a (upper end portion 35c of guide pipe 35 is tapered). An annular groove 33d having a semicircular cross-section for holding a brazing material 90 therein is formed at an extended end portion (which is remote from the terrace surface 33c) of the diametrally contracted end portion 33a of the stator 33. Then, the upper inner peripheral end portion 35a of the guide pipe 35 is externally fitted on the diametrally contracted end portion 33a with an upper end 35c of the guide pipe 35 being butted against the terrace surface 33c to thereby hold the brazing material 90 between the groove 33d and the inner peripheral surface of the guide pipe 35, thereby preventing the brazing material 90 from falling off.

In this case, a magnetic steel (the temperature of magnetic annealing: 1100-1150°C) such as electromagnetic stainless steel is employed as a material for the stator 33. A non-magnetic steel such as non-electromagnetic stainless steel (for example, SUS305) is employed as a material for the guide pipe 35. Copper wax (melting temperature: 1083°C) or bronze wax (melting temperature: 880-1025°C) for stainless steel or general steel is employed as a material for the brazing material 90. By the way, as for the material for the stator 33, although stainless steel is employed herein in view of preventing the generation of rust, it is also possible to employ other kinds of steel material.

Alternatively, as shown in FIG. 4, the lower diametrally contracted portion 61 of the housing 60 may be constructed into such a size and a configuration that it can be externally inserted with pressure over an outer peripheral portion (diametrally contracted portion 50f) of holder 50. At the same time, nickel plating or chrome plating is applied to the holder 50 and the housing 60, and the lower diametrally contracted portion 61 of housing 60 thus plated is press-inserted into the diametrally contracted portion 50f of holder 50 until the lower end 61d of diametrally contracted portion 61 is butted against the terrace surface 50d of holder 50. Herein, as for the material for the housing 60, steel for drawing work (SPCE) is employed and as for the material for the holder 50, steel such as free cutting sulfur steel is employed. By the way, as for the plating, chrome plating may be employed in place of the nickel plating.

Alternatively, the holder 50 may be formed into a step-attached cylindrical body having a terrace surface 50c and a diametrally enlarged portion 50b to thereby enable the guide pipe 35 to be snugly inserted therein. Then, a lower end portion 35b of the guide pipe 35 is inserted into the diametrally enlarged portion 50b of holder 50 until the lower end 35e thereof is butted against the terrace surface 50c of the holder 50. At the same time, a brazing material 92 (the same material as that of brazing material 90) is mounted on a portion of the holder 50 (a chamfered portion 50r formed at an upper inner peripheral edge of the holder 50) which is designed to be engaged with the guide pipe.

In this manner, the stator 33, the guide pipe 35, the holder 50 and the housing 60 constituting the assembled body 80 are temporarily interconnected with each other. Then, the assembled body 80' in a stacked state (a state shown in FIG. 2) is heated at a predetermined temperature by making use of a continuous heat treating furnace equipped with a work-transferring means such as a mesh belt conveyer. More specifically, this heat treating furnace is provided with a heating section and a cooling section located contiguous to the heating section. The assembled body 80' tacked as described above is placed, in an erected state (the state shown in FIG. 2), on a conveyer and continuously or intermittently transferred into the treating furnace, in which the assembled body 80' is heated, while being kept moving in the treating furnace, at the aforementioned magnetic annealing temperature for a predetermined period of time (for example, about one hour). Thereafter, the assembled body 80' is delivered to the cooling section to cool the assembled body 80'. In this case, the atmosphere inside the furnace should preferably be a reducing atmosphere (a suitable quantity of reducing gas such as hydrogen gas is added to an inert gas such as nitrogen gas) in order to prevent the oxidation of the assembled body 80' .

When the assembled body 80' is heated in this manner in the treating furnace, the brazing between the stator 33 and the guide pipe 35 as well as between the guide pipe 35 and the holder 50 can be executed. When the assembled body 80' is subsequently cooled, the magnetic annealing of the stator 33, the holder 50 and housing 60 can be executed. In this case, at the brazed portion between the stator 33 and the guide pipe 35, the brazing material 90 is fused and, due to capillary action, the fused brazing material 90 is sucked up through the air gap "S" formed at the fitted portion between the diametrally contracted portion 33a of stator 33 and the guide pipe 35 as shown in FIG. 3. In this case, since the terrace surface 33c of stator 33 is butted against the upper end 35c of the guide pipe 35 from the beginning and hence the brazing material is not permitted to exist between the terrace surface 33c and the upper end 35c of the guide pipe 35 and, furthermore, since the stator 33 is prevented from being lifted upward by the brazing material 90 that has been sucked up into the space "Sa" of fitted portion between the stator 33 and the guide pipe 35, the terrace surface 33c of stator 33 can be kept directly contacted with the upper end 35c of the guide pipe 35 even during the brazing process. In the assembled body 80 assembled in this manner, the stator 33 and the guide pipe 35 can be brazed and fixedly coupled to each other at the fitted portion thereof during a single step of brazing and, at the same time, the magnetic annealing of the magnetic metallic materials of the stator 33, the holder 50 and the housing 60 is effected, thus sufficiently improving the magnetic properties thereof.

Further, since the stator 33 and the guide pipe 35 are brazed to each other while retaining the initial state where the terrace surface 33c of stator 33 is butted against the upper end 35c of the guide pipe 35, there is no possibility that the air gap (β in FIG. 5(B)) as seen in the conventional method can be generated. As a result, the length of air gap between the sucking member 34 to be secured to a lower end of the stator 35 and the plunger 37 can be secured appropriately, thus making it possible to manufacture an electromagnetic control valve which is capable of appropriately performing the control of flow rate.

Additionally, at the brazed portion between the lower end portion 35b of the guide pipe 35 and the holder 50, the brazing material 92 is fused and the fused brazing material 92 is permitted to flow into the air gap "Sb" formed at the fitted portion between the lower end 35b of guide pipe 35 and the diametrally enlarged portion 50b of the holder 50. A redundant portion of the brazing material 92 is accumulated at a storage portion 50g. Thereafter, when the brazed portion is cooled, the guide pipe 35 and the holder 50 are fixedly coupled to each other through the brazing of the fitted portion thereof (brazed portion Jb).

As described above, according to this embodiment, the brazing between the stator 33 and the guide pipe 35 as well as between the guide pipe 35 and the holder 50 can be executed simultaneous with the magnetic annealing of the stator 33, the holder 50 and housing 60 during a single brazing process.

Furthermore, since the housing 60 is fabricated into a configuration enabling the housing 60 to be press-inserted into the holder 50 and since nickel plating or chrome plating is applied to the holder 50 and housing 60, the resultant plated housing 60 being subsequently press-inserted into the holder 50 to fabricate an assembled body 80' of tacked state, it is possible to bring about a diffusion bonding effect at the plated portions of these housing 60 and holder 50. As a result, the bonding strength between the housing 60 and the holder 50 can be greatly increased as compared with that can be obtained when the housing 60 is simply press-inserted into the holder 50. In this manner, the bonding strength can be sufficiently enhanced by simply performing the plating and the press-insertion as described above. In this case also, since the heat treatment for obtaining the diffusion bonding effect can be executed during a single brazing process, a total time for heat treatment can be shortened as compared with the case where the heat treatment and the brazing are separately performed, thus making it possible to further reduce the cost for heat treatment as well as the manufacturing cost.

Further, since the coupling between the stator 33 and the guide pipe 35 as well as the coupling between the guide pipe 35 and the holder 50 can be respectively performed through the brazing and press-insertion, fixing members such as O-ring is no longer required to be employed, thus making it possible to reduce the number of parts and to enhance the assembling property and fabricating property, thus making it possible to further reduce the manufacturing cost.

Next, another embodiment of control valve for compressor according to the present invention will be explained in detail with reference to the drawings.

### <Second embodiment>

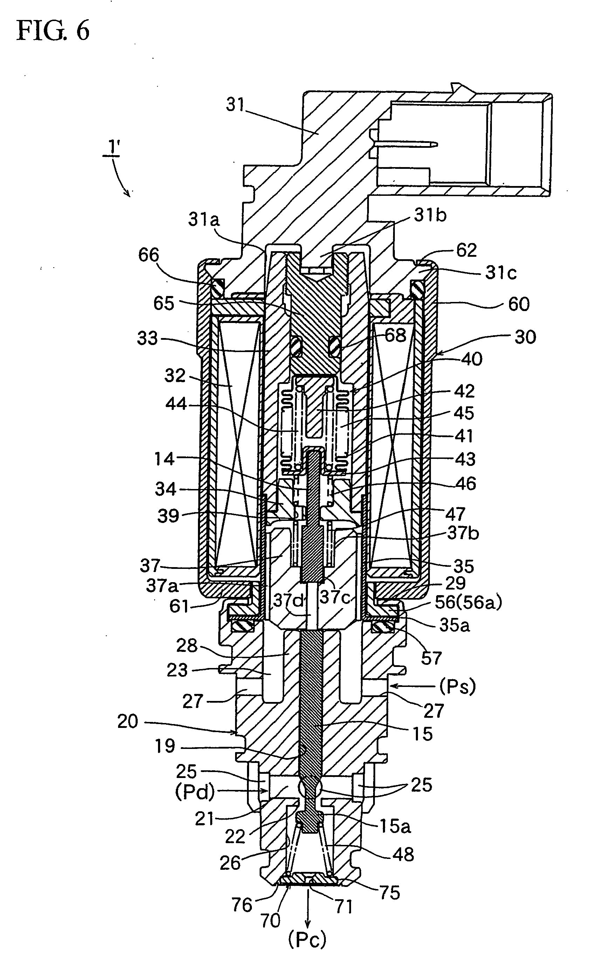

FIG. 6 is a longitudinal sectional view illustrating a second embodiment of the control valve for a variable capacity type (crutch-attached) compressor according to the present invention.

The control valve 1' for crutch-attached compressor shown in FIG. 6 is constructed such that a restricting mechanism (throttle aperture-attached closing member 70) to be described hereinafter is attached to a control valve for a crutch-less compressor. In other words, all of the components other than the restricting mechanism are the same as those of the crutch-less compressor. Next, the construction of the control valve 1' will be explained in detail as follows.

The control valve 1' comprises: a valve rod 15 having a valve body 15a having a +-shaped or T-shaped cross-section and attached to a lower end of the valve rod 15; a valve main body 20 provided with a valve chamber 21 having a valve aperture (valve seat) 22 with which the valve body 15a can be retractivebly contacted, with a plurality of inlet ports 25 for introducing cooling medium of discharge pressure "Pd" from a compressor, the inlet ports 25 being formed in an outer peripheral portion of the valve chamber 21 (i.e. the inlet ports 25 being disposed on an upstream side of the valve aperture 22), and with a cooling medium outlet port 26 which is disposed below (on a downstream side of) the valve aperture 22 and communicated with a crank chamber of the compressor; and an electromagnetic actuator 30.

This electromagnetic actuator 30 is equipped with a coil 32 having a connector 31 for electroexcitation, a cylindrical stator 33 disposed on the inner peripheral side of the coil 32, a sucking member 34 having U-shaped cross-section and press-inserted into a lower inner peripheral end portion of the stator 33, a flange 35a-attached pipe 35 welded, through an upper end thereof, to a lower outer peripheral end portion (step portion) of the stator 33; a plunger 37 slidably disposed to move up and down inside the pipe 35 and located below the sucking member 34, and a closed end aperture-attached cylindrical housing 60 disposed covering the outer peripheral portion of the coil 32.

Further, a hexagon socket head adjusting screw 65 is screwed on an upper portion of the stator 33. A pressure sensitive chamber 45 into which the sucking pressure "Ps" of compressor is to be introduced is formed between the adjusting screw 65 attached to the inner peripheral wall of stator 33 and the sucking member 34. In this pressure sensitive chamber 45, there is disposed, as a pressure sensitive driving member, a bellows main body 40 consisting of a bellows 41, a downwardly projected upper stopper 42, a reverse U-shaped lower stopper 43 and a compression coil spring 44. Further, a compression coil spring 46 for urging the bellows main body 40 to contract (in the direction to contract it toward the adjusting screw 65) is interposed between the bellows main body 40 and the sucking member 34. Further, a step-attached operating rod 14 piercing through the sucking member 34 is interposed between the reverse U-shaped lower stopper 43 and a U-shaped portion 37c of plunger 37. Additionally, a valve-opening spring 47 made of a compression coil spring for urging the valve rod 15 downward (in the direction to open the valve) by way of the plunger 37 is interposed between the sucking member 34 and the U-shaped portion 37c of plunger 37.

On the other hand, a reverse U-shaped stopper 28 for regulating the lowermost descending position of the plunger 37 is projected upward over the valve chamber 21 of the valve main body 20. A guide hole 19 in which the valve rod 15 is slidably inserted is formed at a central portion of the valve main body 20 including the reverse U-shaped stopper 28 and located over the valve chamber. A suction pressure-introducing chamber 23 is formed around the outer peripheral wall of the reverse U-shaped stopper 28 and a plurality of suction pressure cooling medium-introducing ports 27 are formed in the outer wall of the suction pressure-introducing chamber 23. A cooling medium of sucking pressure "Ps" that has been introduced into the suction pressure-introducing chamber 23 from the cooling medium-introducing ports 27 is designed to be introduced into the pressure sensitive chamber 45 via longitudinal grooves 37a formed on the outer peripheral wall of plunger 37, via a through-hole 37d formed at a central axis of plunger 37 and via a through-hole 39 formed in the sucking member 34.

A valve-closing spring 48 made of a conical compression spring for urging the valve rod 15 upward to push the through-hole 37d portion of plunger 37 through an upper end of the valve rod 15 is disposed in the cooling medium outlet port 26 provided at a lowermost portion of the valve main body 20.

The lower flange portion 35a of the pipe 35 is mounted, through an O-ring 57, on an upper end of the valve main body 20. a flange 56a-attached short cylindrical pipe holder 56 is interposed between the flange portion 35a and the coil 32. These flange portions 35a and 56a are both fixed by means of the upper outer peripheral chamfering portion 29 of the valve main body 20. An open bottom portion 61 of the housing 60 is press-inserted in an upper end portion of the pipe holder 56. An upper end portion of the housing 60 is calked to the flange portion 31c of the connector 31. An O-ring 66 is interposed between the housing 60 and the connector 31. By the way, at a lower central portion of the connector 31, there is formed a recessed portion 31a in which a projected portion 31b to be engaged with the hexagonal hole of the adjusting screw 65 is formed. An upper portion of the stator 33 as well as an upper portion of the adjusting screw 65 is inserted into this recessed portion 31a.

An annular anchoring groove 75 having a calking portion 76 is formed on a lower inner peripheral portion of the cooling medium outlet port 26 which is provided at a lowermost portion of the valve main body 20. In this anchoring groove 75, a restricting hole-attached closing member 70 acting as a restricting mechanism is hermetically mounted and calked, thereby making this cooling medium outlet port 26 into a restricting hole-attached closed chamber. The restricting hole-attached closing member 70 has a thick disk at a central portion thereof and a funnel-shaped restricting through-hole 71 at a central portion thereof. The opening area of this restricting through-hole 71 is made smaller than a maximum effective opening area (fully opened state) of the valve aperture 22 which is designed to be opened or closed by the valve body 15a of valve rod 15. Namely, the opening area of this restricting through-hole 71 is set to such a size that the maximum flow rate of cooling medium to be fed from the cooling medium outlet port (chamber) to the crank chamber of the crutch-attached compressor can be restricted so as not to exceed over an acceptable limit (a limitation to prevent any trouble in the operation of crutch-attached compressor). By the way, a peripheral portion outside the central thick portion of the restricting hole-attached closing member 70 is formed into a spring shoe for receiving a lower end portion of the valve-closing spring 48.

In the control valve 1' constructed as described above, when the solenoid portion consisting of the coil 32, the stator 33 and the sucking member 34 is electroexcited, the plunger 37 is drawn toward the sucking member 34, forcing the valve rod 15 to move upward (in the valve-closing direction) by the urging force of the valve-closing spring 48. On the other hand, the cooling medium of suction pressure "Ps" that has been introduced into the cooling medium-introducing ports 27 from the compressor is introduced from the suction pressure-introducing chamber 23 into the pressure sensitive chamber 45 via longitudinal grooves 37a formed on the outer peripheral wall of plunger 37 and via a through-hole 39 formed in the sucking member 34. The bellows main body 40 (the interior thereof is kept in vacuum) is caused to displace, i.e. contract or expand depending on the pressure (the suction pressure "Ps") inside the pressure sensitive chamber 45 (when the suction pressure "Ps" is high, the bellows main body 40 is contracted, and when the suction pressure "Ps" is low, the bellows main body 40 is expanded). Then, this displacement is transmitted, via the operating rod 14 and the plunger 37, to the valve rod 15, thereby making it possible to adjust the magnitude of opening of valve (the magnitude of lift from the valve aperture 22 of the valve body 15a), in other words, the flow rate of cooling medium to be delivered from the valve aperture 22. Namely, the flow rate of cooling medium can be determined depending on the sucking force of the plunger 37 to be effected by the solenoid portion consisting of the coil 32, the stator 33 and the sucking member 34, on the urging force of the bellows main body 40, and on the urging force of the valve-opening spring 47 and the valve-closing spring 48.

In the case, if it is assumed that the restricting hole-attached closing member 70 is not existed or the opening area of the restricting through-hole 71 is sufficiently large, in other words, if the control valve 1' is a control valve for use in a crutch-less compressor, the magnitude of opening of valve (the magnitude of lift from the valve aperture 22 of the valve body 15a) relative to the value of electric current to be fed to the coil 32 is permitted to continuously (linearly) change as the value of electric current changes from small to large. However, when the value of electric current becomes zero or nearly zero, the sucking force of the plunger 37 by the sucking member 34 becomes smaller, so that the valve rod 15 is pushed down, in a stroke, to the maximum descending position (maximum lift position) due to the valve-opening force of valve-opening spring 47, thereby fully opening the valve aperture 22 (the magnitude of opening becomes maximum). As a result, the flow rate of a cooling medium to be fed from the cooling medium outlet port 26 located on the downstream side of the valve aperture 22 to the crank chamber of compressor is caused to increase in a stroke (maximum flow rate), thus quickly increasing the pressure "Pc" inside the crank chamber of compressor.

Namely, the region where the value of electric current is nearly zero would be turned into an uncontrollable region. Even if this uncontrollable region is permitted to exist in this manner, almost no problem would be raised in the case of the crutch-less compressor. In the case of the crutch-attached compressor however, when the control valve is caused to bring into the uncontrollable region, the pressure "Pc" inside the crank chamber exceeds over an allowable limitation, thereby raising problems in terms of control as well as in structural viewpoints.

Whereas in the case of the control valve 1' according to this embodiment, since the closing member 70 equipped with the restricting through-hole 71 having a predetermined opening area is attached to the cooling medium outlet port 26, even if the valve aperture 22 is fully opened or nearly fully opened, the maximum flow rate of cooling medium to be fed to the crank chamber of compressor can be restricted by the restricting through-hole 71 so as not to exceed over an acceptable limit regulated in the crutch-attached compressor. In this case, when the value of electric current to be fed to the coil 32 becomes zero or nearly zero, the valve rod 15 is pushed downward by the valve-opening force of the valve-opening spring 47 as described above. In this case however, since the flow rate of cooling medium to be fed to the crank chamber of compressor can be restricted by the restricting through-hole 71, the pressure inside the cooling medium outlet port (chamber) is increased, thereby rendering the descending rate of the valve rod 15 (valve body 15a) to become moderate, thus preventing the flow rate of cooling medium passing through the valve aperture 22 from quickly increasing.

As described above, in the case of the control valve 1' according to this embodiment, even if the valve aperture 22 is fully opened or nearly fully opened, the maximum flow rate of cooling medium to be fed to the crank chamber of compressor can be restricted by the restricting through-hole 71 so as not to exceed over an acceptable limit regulated in the crutch-attached compressor. Therefore, the control valve 1' would be suited for use in a crutch-attached compressor, and moreover since it is only required to attach a restricting mechanism such as the restricting hole-attached closing member 70 to the control valve of the crutch-less compressor, most of parts for the control valve can be used not only for the crutch-less compressor but also for the crutch-attached compressor when the control valves are manufactured for use in a crutch-less compressor or in a crutch-attached compressor, thereby making it possible to reduce the manufacturing cost of the control valve.

### <Third embodiment>

Next, a third embodiment of the control valve for a variable capacity type (crutch-attached) compressor according to the present invention will be explained.

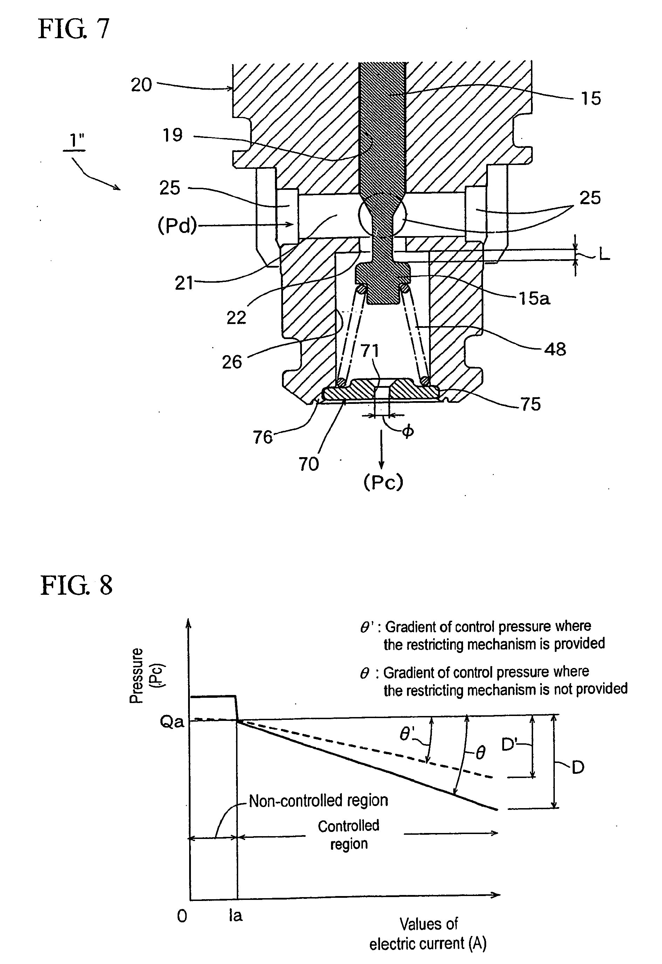

The control valve 1" according to this embodiment is the same in fundamental structure as that of the control valve 1' of the second embodiment shown in FIG. 6 except that the magnitude of opening of valve (the magnitude of lift "L" from the valve aperture 22 of the valve body 15a (see FIG. 7)) is regulated in order to suppress the change in gradient of controlling pressure (see FIG. 8) that may be caused due to the provision of the throttle aperture-attached closing member 70 as a restricting mechanism.

Next, the construction of the control valve 1" will be explained in detail as follows.

Due to the provision of the throttle aperture-attached closing member 70 as a restricting mechanism, when the value of electric current to be fed to the coil 32 becomes smaller than "Ia" which is close to zero (for example, 0.1A) (thus entering into uncontrollable region), the magnitude of opening of valve (magnitude of lift "L") becomes the maximum or nearly maximum. However since the maximum flow rate of cooling medium to be fed to the crank chamber of compressor is restricted by the restricting through-hole 71 of the closing member 70, the pressure "Pc" to be fed to the crank chamber of compressor is almost the same as the pressure value "Qa" on the occasion where the value of electric current is "Ia".

Whereas in the controllable region where the value of electric current to be fed to the coil 32 is not less than "Ia" (for example, 0.1A), as the value of electric current to be fed to the coil 32 changes from small to large, the pressure "Pc" becomes smaller and the gradient of controlling pressure becomes θ'.

However, the gradient of controlling pressure demanded in the control valve for crutch-attached compressor is θ (θ>θ') as shown in FIG. 3 by a solid line. This controlling pressure gradient θ is equal to the controlling pressure gradient in the controllable region in the case where a restricting mechanism (throttle aperture-attached closing member 70) is not provided, i.e. under the condition where the control valve for a crutch-less compressor is employed. Thus, the controlling pressure gradient θ' of the situation where a restricting mechanism is provided is smaller than the controlling pressure gradient θ of the situation where a restricting mechanism is not provided. Therefore, the controllable range (D') of the pressure "Pc" where a restricting mechanism is provided becomes narrower than that (D) of the pressure "Pc" where a restricting mechanism is provided.

The reason for causing the controlling pressure gradient to become smaller (θ->θ') due to the provision of the restricting mechanism is assumed to be ascribed to the accumulation of pressure (increase of pressure) in the cooling medium outlet port (chamber) 26 due to the existence of the restricting mechanism (throttle aperture-attached closing member 70) . In this case, this trend becomes more conspicuous as a difference between the magnitude of opening of valve (magnitude of lift "L") and the diameter Φ of the restricting through-hole 71 of throttle aperture-attached closing member 70 (opening area=magnitude of restriction) becomes larger. Furthermore, when the pressure is accumulated in the cooling medium outlet port (chamber) 26, the force for closing the valve body 15a (valve-closing force) is also caused to increase.

Therefore, in this embodiment, the diameter Φ of the restricting through-hole 71 of throttle aperture-attached closing member 70 (opening area=magnitude of restriction) is selected such that it would not badly affect the valve opening/closing movement and, at the same time, the magnitude of opening of valve (magnitude of lift "L") is regulated, more specifically, the magnitude of opening of valve (magnitude of lift "L") is regulated so as to make it smaller than that of the aforementioned second embodiment, thereby further restricting the flow rate of cooling medium to be delivered from the valve chamber 21 to the cooling medium outlet port (chamber) 26 through the valve aperture 22 as compared with the flow rate of cooling medium set forth in the aforementioned second embodiment.

More specifically, the diameter Φ of the restricting through-hole 71 of throttle aperture-attached closing member 70 is confined within the range of 1.2-1.3mm, thus regulating the maximum lift "L" to the range of 0.15-0.25mm. By the way, in the second embodiment, the bore diameter Φ is set to 4.9mm for example and the maximum lift "L" is set 0.65mm for example.

In the case of the control valve 1" for a variable capacity compressor according to the third embodiment constructed in this manner, since the magnitude of lift "L" can be regulated through the provision of the restricting mechanism (throttle aperture-attached closing member 70) so as to suppress the change in gradient of controlling pressure, the gradient of controlling pressure in the controllable region can be made almost identical with the gradient θ (shown by a solid line in FIG. 8) demanded of the control valve for use in a crutch-attached compressor. Therefore, it is now possible, through the provision of the restricting mechanism (throttle aperture-attached closing member 70), not only to restrict the maximum flow rate of cooling medium to be fed to the crank chamber of compressor but also to substantially completely satisfy the controlling characteristics demanded of the control valve for use in the crutch-attached compressor.

Furthermore, even in this embodiment, since the control valve can be fabricated by simply attaching a restricting mechanism such as a throttle aperture-attached closing member 70 to the control valve for a crutch-less compressor, most of the control valves to be manufactured for use in a crutch-less compressor or a crutch-attached compressor can be used not only for the crutch-less compressor but also for the crutch-attached compressor, thereby making it possible to reduce the manufacturing cost of the control valve of the present invention.

By the way, in the foregoing embodiments, although the closing member 70 having only one restricting through-hole 71 is employed as the restricting mechanism, the restricting mechanism is not limited to the closing member 70 but can be variously modified. For example, the closing member may be provided with a plurality of restricting apertures wherein the number of the restricting apertures and the size and configuration of each restricting aperture may be suitably selected as long as a total opening area of these apertures can be confined smaller than the maximum effective opening area of the valve aperture.

## Claims

1. A method of manufacturing an assembled body composed of a plurality of members including a metal member "A" made of a magnetic material and a metal member "B" made of a non-magnetic material, the method comprising the steps of:
heating the metal member "A" and the metal member "B" under conditions suitable for magnetic annealing of the metal member "A" to braze the metal member "A" to the metal member "B" to obtain an assembled body comprising the metal member "A" and the metal member "B"; and
gradually cooling the assembled body to perform magnetic annealing of the metal member "A".

2. The method according to claim 1, wherein the metal member "A" is brazed to the metal member "B" by making use of a brazing material having a melting point which is lower than a magnetic annealing temperature of the metal member "A".

3. The method according to claim 1, wherein the metal member "A" is made of a magnetic steel such as an electromagnetic stainless steel, the metal member "B" is made of a non-magnetic steel material such as non-magnetic stainless steel, and the brazing material is made of copper wax or bronze wax.

4. The method according to claim 1, wherein the metal member "A" is formed of a step-attached columnar or cylindrical body having a diametrally contracted end portion and a terrace surface, the metal member "B" is formed of a cylindrical body having an inner diameter which is large enough to enable it to externally fit on the diametrally contracted end portion, the diametrally contracted end portion of the metal member "A" is provided, at an extended end portion thereof which is remote from the terrace surface, with an annular groove facing an inner peripheral surface of the metal member "B" for holding a brazing material therein, and the brazing is performed under conditions wherein the metal member "B" is externally fitted on the diametrally contracted end portion with an fitted end of the metal member "B" being butted against the terrace surface and the brazing material being held between the annular groove and the inner peripheral surface of the metal member "B".

5. The method according to claim 1, wherein the metal member "A" is a stator of an electromagnetic control valve, and the metal member "B" is a guide pipe to be used as a plunger guide of the electromagnetic control valve.

6. A method for manufacturing an electromagnetic control valve provided with an assembled body comprising a stator made of a magnetic metallic material, a guide pipe for use as a plunger guide which is fixedly coupled to an lower end portion of the stator and made of a non-magnetic metallic material, a holder fixedly coupled to an lower end portion of the guide pipe and made of a metallic material, and a housing fixedly coupled to the holder and made of a magnetic metallic material;
wherein the stator is formed of a step-attached columnar or cylindrical body having a diametrally contracted end portion and a terrace surface, the guide pipe is formed of a cylindrical body having an inner diameter which is large enough to enable it to externally fit on the diametrally contracted end portion, the diametrally contracted end portion of the stator is provided, at an extended end portion thereof which is remote from the terrace surface, with an annular groove facing an inner peripheral surface of the guide pipe for holding a brazing material therein, the guide pipe is externally fitted on the diametrally contracted end portion with an fitted end of the guide pipe being butted against the terrace surface to thereby temporarily interconnect the stator, the guide pipe, the holder and the housing, the brazing material is held between the annular groove and the inner peripheral surface of the guide pipe;
the method being **characterized in that** it comprises the steps of heating the temporarily interconnected assembled body under conditions for effecting magnetic annealing of the magnetic metallic material such as the stator; and gradually cooling the assembled body to perform magnetic annealing of the stator, the holder and the housing.

7. The method according to claim 6, wherein the housing is fabricated into a configuration enabling the housing to be press-inserted into the holder, the holder and housing are subjected to nickel plating or chrome plating, and the plated housing is press-inserted into the holder, thereby fabricating the temporarily interconnected assembled body.

8. The method according to claim 6, wherein the holder is formed into a step-attached cylindrical body to thereby enable the guide pipe to be snugly inserted therein, and the fabrication of the temporarily interconnected assembled body is performed by inserting the guide pipe into the holder and, at the same time, by disposing the brazing material at an interface between the inserted portion of the guide pipe and the holder.

9. An electromagnetic control valve to be manufactured by the method according to claim 6.

10. A control valve for a variable capacity compressor, which comprises:
a valve rod having a valve body;
a valve main body provided with a valve chamber having a valve aperture with which the valve body can be retractivebly contacted, with an inlet port for cooling medium of discharge pressure which is disposed on an upstream side of the valve aperture, and with a cooling medium outlet port which is disposed on a downstream side of the valve aperture and communicated with a crank chamber of the compressor;
an electromagnetic actuator for driving the valve rod to move in the direction of opening or closing the valve aperture; and
a pressure sensitive moving member for driving the valve rod to move in the direction of opening or closing the valve aperture in response to a sucking pressure of the compressor;
wherein the cooling medium outlet port is further provided with a restricting mechanism for restricting a maximum flow rate of the cooling medium to be fed to the crank chamber.

11. A control valve for a variable capacity compressor, which comprises:
a valve rod having a valve body;
a valve main body provided with a valve chamber having a valve aperture with which the valve body can be retractivebly contacted, with an inlet port for introducing cooling medium of discharge pressure from a compressor, the inlet port being disposed on an upstream side of the valve aperture, and with a cooling medium outlet port which is disposed on a downstream side of the valve aperture and communicated with a crank chamber of the compressor;
an electromagnetic actuator constituted by a coil, a cylindrical stator disposed on the inner peripheral side of the coil, a sucking member secured to the stator, and a plunger disposed below the sucking member and enabled to slide up and down;
a pressure sensitive chamber which is formed on the inner peripheral side of the stator and over the sucking member and to which an inlet pressure is introduced therein from the compressor;
a pressure sensitive driving member disposed in the pressure-sensitive chamber; and
an operating rod interposed between a pressure sensitive driving member and the plunger;
wherein the valve body is designed to be moved in the valve-closing direction as the plunger is moved close to the sucking member and in the valve-opening direction as the operating rod is pushed downward by the actuation of the pressure sensitive driving member; and the cooling medium outlet port is further provided with a restricting mechanism for restricting a maximum flow rate of the cooling medium to be fed to the crank chamber.

12. The control valve for a variable capacity compressor according to claim 10 or 11, wherein the restricting mechanism is constituted by a restricting pore-attached closing member which is secured to the cooling medium outlet port.

13. The control valve for a variable capacity compressor according to claim 11, wherein the restricting pore-attached closing member is provided with one or a plurality of restricting pores, a total area of aperture of the restricting pore-attached closing member is less than a maximum effective aperture area of the valve aperture.

14. The control valve for a variable capacity compressor according to claim 10 or 11, wherein the restricting mechanism is designed to regulate the magnitude of opening of valve in order to inhibit changes in gradient of controlling pressure.

15. The control valve for a variable capacity compressor according to claim 14, wherein the magnitude of lift of the valve body from the valve aperture is regulated for regulating the magnitude of opening of valve.

16. A crutch-attached compressor comprising the control valve for a variable capacity compressor which is claimed in claim 10 or 11.
